# EUROPEAN PATENT SPECIFICATION

(11) **EP 1 204 943 B1**
(45) Date of publication and mention of the grant of the patent: **16.06.2004**
(21) Application number: 00952064.4
(22) Date of filing: 02.08.2000
(51) Int. Cl.: G06K 7/00

(54) **SYNCHRONISED SYSTEM COMPRISING A PLURALITY OF TRANSPONDER READING DEVICES**
SYNCHRONISIERTES SYSTEM MIT MEHREREN LESE-VORRICHTUNGEN FÜR TRANSPONDER
SYNCHRONISATION D'UN SYSTEME COMPRENANT UNE PLURALITE DE DISPOSITIFS DE LECTURE POUR DES TRANSPONDEURS

(30) Priority: 02.08.1999 NL 1012760
(43) Date of publication of application: 15.05.2002
(73) Proprietor: N.V. Nederlandsche Apparatenfabriek NEDAP, NL-7141 DE Groenlo (NL)
(72) Inventor: POSTMA, Ebele, Marten, NL-7244 NN Barchem (NL); ROOSENBOOM, Derk, Jan, NL-7482 KM Haaksbergen (NL); KERKHOFF, Bart, NL-7412 PS Deventer (NL); WENTINK, Raymond, NL-7255 CN Hengelo (NL)
(74) Representative: Prins, Adrianus Willem, Mr. Ir.
(86) International application number: PCT/NL2000/000553
(87) International publication number: WO 2001/009814

(56) References cited:
- US-A- 5 646 607
- US-A- 5 708 423
- US-A- 5 748 137
- US-A- 5 793 324

## Description

The invention relates to a system comprising multiple reading devices which are arranged for wireless readout of at least two different types of transponders, each reading device being arranged for generating, in use, a time-repetitive electromagnetic interrogation transmission pulse, while the pulse duration has a predetermined first value ΔT and the quiescent period between two successive interrogation transmission pulses has a predetermined second value ΔR when the reading device does not receive a response from one of the transponders; the first value of the reading device is prolonged when the reading device during the transmission of an interrogation transmission pulse receives a response from at least one transponder of a first type of the transponders; and the second value of the reading device is prolonged when the reading device, in between the transmission of two interrogation transmission pulses, receives a response from at least one transponder of a second type of the transponders.

This type of system is known per se and is described, for example, in US-A-5793324. In the known system, the reading devices work according to ISO 11785. The transponders of the first type are then full-duplex transponders and the transponders of the second type are half-duplex transponders. This means that a transponder of the first type, when it receives an interrogation transmission pulse, sends information to the respective reading device during the reception of the interrogation transmission pulse. To that end, the transponder can, for instance, modulate the interrogation transmission pulse. Both an absorption and a transmission system may be involved. To enable the transponder to have sufficient time to transmit a reply, the first value is prolonged. If the respective reading device has received the complete reply from the transponder, the reading device will terminate the transmission of the interrogation transmission pulse. However, according to ISO 11785, the prolongation is carried out to a maximum of a predetermined maximum magnitude. Termination of the interrogation transmission pulse will therefore occur when the reply has been received or when the pulse has been prolonged by the maximum value mentioned when the reply has not been received (completely) yet.

When a transponder of the second type is interrogated by a reading device, the reading device likewise transmits the interrogation transmission pulse mentioned. When the transponder receives the interrogation transmission pulse, it will not transmit a reply until after the interrogation transmission pulse has stopped, in the quiescent period mentioned, which reply is received by the reading device. To ensure that sufficient time is present for receiving the complete reply, according to ISO 11785 the quiescent period is prolonged by a fixed value. Accordingly, the transmission of a next interrogation transmission pulse is delayed by a fixed value. In practice, it has been found that the area in which transponders are required to be detectable cannot always be covered by means of a single reading device. In that case, therefore, use is made of a multiplicity of these devices, each arranged for wireless readout of the transponders mentioned.

A problem with the known system is the synchronization of the reading devices. When, for instance, one of the reading devices is designed as master, while all other reading devices are designed as slaves, problems may yet arise. Indeed, when one of the slave reading devices prolongs the first or second value in connection with a received signal from a transponder, this reading device will proceed to generate interrogation transmission pulses in a manner not synchronized with the other reading devices. In particular, this means that this particular reading device generates an interrogation transmission pulse at the time of the quiescent period of other reading devices. As a result, disturbances will be generated by the transmission of this particular reading device, in the reception of signals by these other reading devices. Conversely, other reading devices will generate interrogation transmission pulses at the time of the (prolonged) quiescent period of the particular reading device. As a result, disturbances are generated by these other reading devices in the reception of signals by the particular reading device. The result is that none of the reading devices is capable anymore of communicating with the transponders in a manner free of disturbance. The invention contemplates the provision of a solution to the problem mentioned and is characterized in that the reading devices are connected with each other through a synchronization connection, while, in use, a first reading device of the multiple reading devices functions as master and feeds synchronization signals to the synchronization connection, and other reading devices of the multiple reading devices function as slaves and in response to the synchronization signals of the first reading device on the synchronization connection synchronize the transmission of the interrogation transmission pulses with the transmission of the interrogation transmission pulses by the first reading device, while a second reading device of the other reading devices, if it receives a response from a transponder of the first type and/or a transponder of the second type and correspondingly prolongs the first and/or second value, feeds synchronization signals to the synchronization connection, while all of the reading devices other than the second device, including the first reading device, also transmit with a prolonged first and/or second value.

According to the invention, it is therefore possible that the reading devices that do not have the status of master can nonetheless cause all reading devices, including the reading device that has the status of master, to follow a prolongation of the first and/or second period of these reading devices, so that a synchronization within the system is maintained.

More particularly, it holds that the second reading device, if it receives a response from a transponder of the second type, delays the transmission of a next interrogation transmission pulse and feeds a synchronization signal to the synchronization connection, while the other reading devices, including the first reading device, in response to the synchronization signal of the second reading device, likewise delay the transmission of interrogation transmission pulses, the first reading device after delay generates a new interrogation transmission pulse and then feeds a synchronization signal to the synchronization connection so that all other reading devices, including the second reading device, in response to the synchronization signal of the first reading device transmit new interrogation transmission pulses, synchronized with the first reading device.

It further holds, in particular, that the second reading device, if during the transmission of an interrogation transmission pulse it receives a response from a transponder of the first type, prolongs the transmission of the interrogation transmission pulse and during the prolonged transmission of the interrogation transmission pulse feeds a synchronization signal to the synchronization connection, while all other reading devices, including the first reading device, in response to the synchronization signal, prolong the transmission of the interrogation transmission pulses, at least until no synchronization signal is fed by the second reading device to the synchronization connection anymore.

For the latter case, it holds, preferably, that the first reading device, after the second reading device no longer feeds a synchronization signal to the synchronization connection, generates an interrogation transmission pulse and feeds a synchronization signal to the synchronization connection, in response to which all other reading devices, including the second reading device, generate interrogation transmission pulses, synchronized with the first reading device.

According to the invention, at start-up of the system, it is not yet clear which of the reading devices will function as master. To effect this choice, it holds, according to a preferred embodiment of the system, that, in use, at the start-up of the system or in case of failure of the first reading device, each reading device which has not failed generates a random wait time and after the expiry of this wait time plus a predetermined wait time, feeds a synchronization signal to the synchronization connection when it has not, via the synchronization connection, received any synchronization signal from one of the other reading devices, while these other reading devices in response to the received synchronization signal which has been generated by one of the reading devices are going to function as slaves, while the reading device which transmits the synchronization signal is going to function as master.

This renders the system particularly flexible. Also when a master fails, for instance through malfunction, the system will restore itself and designate a new master.

According to a highly advanced further elaboration of this aspect of the invention, it holds that the reading device which is going to function as master feeds a code to the synchronization connection, while all reading devices try again to become master as has been described above when the reading devices detect at least two mutually interfering codes on the synchronization connection, and all reading devices maintain their status of slave and master when no mutually interfering codes are detected. What is prevented in this way is that accidentally two reading devices assume the status of master.

The invention also relates to a reading device of the system according to the invention.

The invention will presently be further elucidated with reference to the drawing. In the drawing:
Fig. 1 shows a possible embodiment of a system according to the invention;
Fig. 2 respectively shows the 'sync out' signal of a reading device which has the status of master, the 'sync out' signal of a reading device which has the status of slave, the 'sync in' signal of each of the reading devices; and the field status of each of the reading devices when no transponders are present in the field of the reading devices;
Fig. 3 shows the signals of Fig. 2 when a transponder of the first type is present in the field of a reading device which has the status of master;
Fig. 4 shows the signals of Fig. 2 when a transponder of the second type is present in the field of a reading device with the status of master;
Fig. 5 shows the signals of Fig. 2 when a transponder of the first type is present in the field of a reading device with the status of slave;
Fig. 6 shows the signals of Fig. 2 when a transponder of the second type is present in the field of a reading device which has the status of slave;
   and
Fig. 7 shows the signals of Fig. 2 at the (renewed) start-up of the system according to Fig. 1.

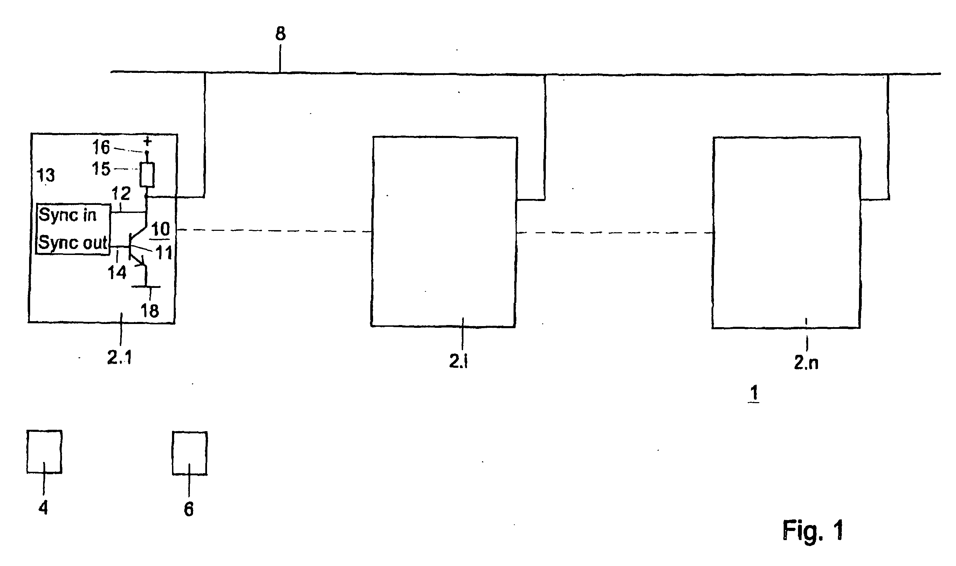

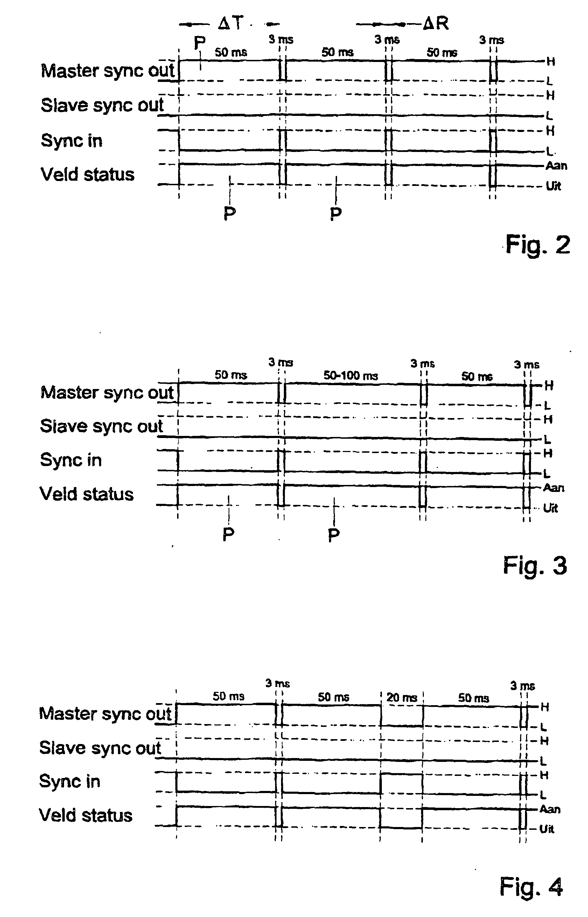

In Fig. 1 reference numeral 1 designates a system according to the invention. The system comprises multiple, in this example identical, reading devices 2.i (i = 1,2,...-n) which are arranged for wireless readout of at least two different types of transponders 4, 6. Each reading device 2.i is arranged for generating, in use, a time-repetitive electromagnetic interrogation transmission pulse P. (See Figs. 2-6). The pulse duration ΔT has a predetermined first value (in this case 50 ms), and the quiescent period ΔR between two successive interrogation transmission pulses has a predetermined second value (in this example 3 ms). The pulse duration and quiescent period are valid when the respective reading device 2.i does not receive any response from one of the transponders 4, 6. The reading devices in this example work according to the ISO 11785 protocol. This means that the first value of the reading device 2.i is prolonged when the reading device 2.i during the transmission of an interrogation transmission pulse receives a response from at least one transponder 4 of the first type of the transponders. The first value can be prolonged to 100 ms at a maximum upon reception from one transponder. The transponder of the first type is a full-duplex transponder which is known as type FDX-B. This type of transponder generates a reply signal during the period in which it is located in the field of an interrogation transmission pulse ΔT. Depending on the moment at which the reply has been received by the respective reading device, the respective reading device will stop transmitting the interrogation transmission pulse.

When the reading device 2.i receives a reply from a transponder 6 of the second type during the quiescent period, it will prolong the quiescent period from 3 ms to 20 ms. The transponder of the second type is a half-duplex transponder. In this example, it is a HDX transponder.

To arrange for all reading devices 2.i to transmit interrogation transmission pulses in mutual synchronization, the reading devices are connected with each other through a synchronization connection 8. This synchronization connection 8 is linked up as 'Wired-Nor' 10 and simply looped from one reading device 2.i to the other reading device 2.j. The 'Wired-Nor' 10 in this example comprises a transistor 11 whose collector is connected with the 'sync' input 12 of a microprocessor 13. The base of the transistor is connected with a 'sync out' output 14 of the microprocessor 13. Further, the 'Wired-Nor' 10 comprises a pull-up resistance 15 which connects the 'sync in' input 12 with a supply voltage 16. The emitter of the transistor 11 is connected to ground 18. The configuration of the reading devices 2.i discussed above is shown for the reading device 2.1. The other reading devices, however, are identical to the reading device 2.1.

The status of the synchronization connection 8 can be influenced by a 'sync out' output 14 of the microprocessor 13 of the reading device 2.i. If the microprocessor output 'sync out' 14 is high, the synchronization connection 8 will be low. If only one reading device were connected with the synchronization connection 8, the synchronization connection 8 would automatically be high if 'sync out' becomes low again. This is not the case if several reading devices 2.i are connected to the synchronization connection 8. This Wired-Nor function is an important property of the protocol. It means that the status of the synchronization connection 8 can only be high if the 'sync out' output of all reading devices is low. Once the synchronization connection 8 has been made low by a reading device 2.i, the synchronization connection cannot be made high by the other reading devices. To be able to get the status of the synchronization connection 8 back to 'high' again, that same reading device needs to 'clear' the synchronization connection 8 again by making its 'sync out' 14 low again.

The actual status of the synchronization connection 8 is read in by each reading device on the 'sync in' input 12 of its microprocessor 13.

In this example, it is assumed that the first reading device 2.1 has the status of master, while the other reading devices 2.2-2.n have the status of slave. Below follows an overview of all possible situations that can occur and a description of how master and slave must respond thereto according to the protocol.

Explanation of the terminology used:
- 'Master sync out':: This is the 'sync out' output from Fig. 1 of the master. The master uses it to manipulate the synchronization connection.
- 'Slave sync out':: This is the 'sync out' output from Fig. 1 of the slaves. The slaves use it to manipulate the synchronization connection.
- 'Sync in':: This is the 'sync in' input from Fig. 1 of both master and slave. They use this input to read in the status of the synchronization connection.
- 'Field status':: This indicates the actual status of the antenna fields of master and slaves.

In a situation where no transponders are located in any one of the fields, the master 2.1 determines that all reading devices 2.2-2.n switch their antenna field on and off in a fixed pattern, as described in ISO 11785. The master 2.1 dictates this pattern by means of its 'sync out' output to the synchronization connection 8. These slaves 2.2-2.n read in this pattern through their 'sync in' input 12.

The slaves 2.2-2.n leave the status of their 'sync out' output 14 unchangedly low because there is no transponder present in their field (see Fig. 2).

If the master 2.1 detects an FDX-B transponder, it can prolong the period that the antenna field is on from 50 ms to 100 ms at a maximum (ISO 11785). In such a case, the master 2.1 keeps its 'sync out' output high longer, so that the synchronization connection 8 remains low longer. As a result, all slaves 2.2-2.n will keep their antenna field on so long until the master 2.1 makes its 'sync out' high again, and so the synchronization connection 8 goes up again. (See Fig. 3).

What holds here, therefore, is that the first value of the reading device 2.i is prolonged when the reading device during the transmission of an interrogation transmission pulse receives a response from a transponder 4 of the first type. Because the first reading device 2.1 in this example is the master, the other reading devices 2.2-2.n will likewise prolong the first value in a synchronized manner.

If the master detects an HDX transponder, it will proceed to prolong the period that the antenna field is off, from 3 ms to 20 ms (ISO 11785). The master in this case keeps its 'sync out' output low longer, so that the synchronization connection 8 remains high longer. As a result, all slaves 2.2-2.n will keep their antenna field off for 20 ms (see Fig. 4).

What holds here, therefore, is that the second value of the reading device 2.1 is prolonged when this reading device, in between transmission of two interrogation transmission pulses, receives a response from a transponder 6 of the second type. Because the reading devices 2.1-2.n are connected with each other through a synchronization connection, while, in use, the first reading device 2.1 of the multiple reading devices functions as master and feeds synchronization signals to the synchronization connection 8, the other reading devices 2.1-2.n of the multiple reading devices, which function as slaves, will, in response to the synchronization signals of the first reading device 2.1, synchronize the transmission of the interrogation transmission pulses with the transmission of the interrogation transmission pulses of the first reading device.

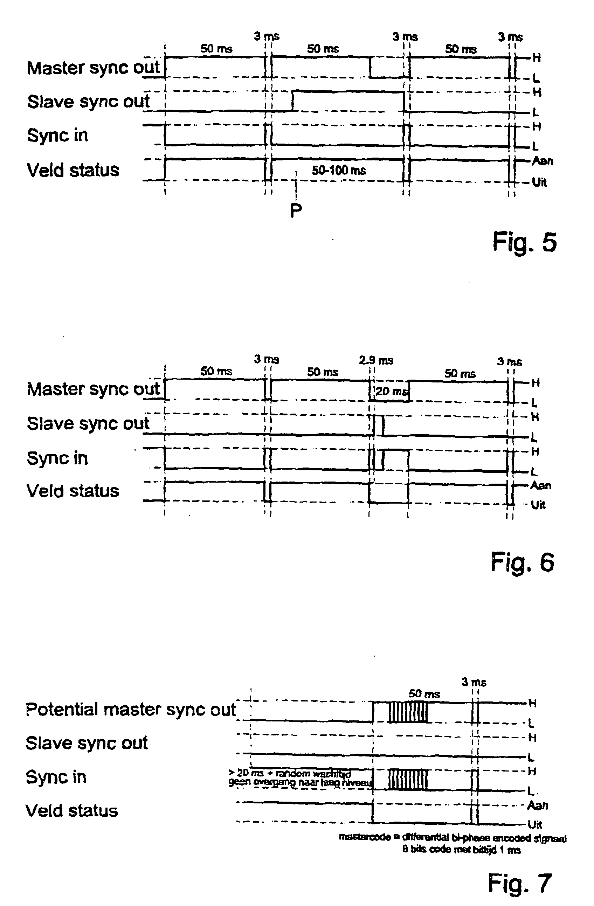

If a slave 2.2 detects an FDX-B transponder, it can prolong the period that the antenna field is on from 50 ms to a maximum of 100 ms (ISO 11785) by making its 'sync out' output high in that case, so that the synchronization connection 8 remains low longer. As a result, all reading devices 2.1, 2.3-2.n will keep their antenna field on so long until this slave 2.2 clears the synchronization connection 8 again (see Fig. 5).

What holds in that case, therefore, is that when a second reading device 2.2 of the other reading devices 2.2-2.n which functions as slave receives a response from a transponder 4 of the first type, it prolongs the first value accordingly and feeds a synchronization signal to the synchronization connection, while all 2.1, 2.3-2.n reading devices other than the second reading device 2.2, including the first reading device 2.1 which functions as master, likewise transmit with a prolonged first value. More particularly, therefore, it holds that the second reading device 2.2, if during the transmission of an interrogation transmission pulse it receives a response from a transponder 4 of the first type, prolongs the transmission of the interrogation transmission pulse and during the prolonged transmission of the interrogation transmission pulse feeds a synchronization signal to the synchronization connection, while all other reading devices 2.1, 2.3-2.n, including the first reading device 2.1 which functions as master, prolong the transmission of the interrogation transmission pulses, at least until no synchronization signal is fed by the second reading device 2.2 to the synchronization connection anymore. The second reading device 2.2 will terminate the prolonged transmission of the interrogation transmission pulse when it has received a complete reply from the transponder of the first type. It will also stop the prolonged transmission of the interrogation transmission pulse when the reply has not been received completely yet but the maximum possible prolongation of 50 ms has been reached. According to the protocol, therefore, the interrogation transmission pulse can be prolonged to a maximum of 100 ms. When the second reading device 2.2 terminates the prolonged transmission of the interrogation transmission pulse, it will also end the supply of the synchronization signal to the synchronization connection 8. All other reading devices 2.1, 2.3-2.n will then likewise end the prolonged transmission of the interrogation transmission pulse. After the synchronization connection 8 has thus been cleared, the first reading device 2.1, which functions as master, will upon expiry of the quiescent period, take the initiative towards transmitting a new interrogation transmission pulse. When the first reading device 2.1 starts the transmission of the new interrogation transmission pulse, it will also feed a synchronization signal to the synchronization connection 8. For the other reading devices 2.2 to 2.n, this is a sign that they are likewise going to transmit a new interrogation transmission pulse, synchronized with the interrogation transmission pulse of the first reading device 2.1.

If a slave 2.2 detects an HDX transponder, it will prolong the period that the antenna field is off from 3 ms to 20 ms (ISO 11875). It indicates this to the other reading devices 2.1, 2.3 and 2.n by making its 'sync out' output high before the regular 3 ms have elapsed. As a result, the master 2.1 and the other slaves 2.3-2.n witness a transition from high to low on their 'sync in' input. For these reading devices, this is the sign that the antenna field must remain off longer. After a fixed time of 4 ms, the slave 2.2 makes its 'sync out' output low again, so that the synchronization connection 8 is cleared again. If the field has been off for 20 ms, the master 2.1 will make its 'sync out' output high again, and so the synchronization connection low, in order that all slaves 2.2-2.n switch on the antenna field again at that time. (See Fig. 6).

What holds in that case, therefore, is that the second reading device 2.2 of the other reading devices 2.2-2.n, if it receives a response from a transponder 6 of the second type, and prolongs the second value accordingly, feeds synchronization signals to the synchronization connection 8, while all reading devices 2.1, 2.3-2.n other than the second reading device, including the first reading device 2.1 which functions as master, likewise transmit with a prolonged second value. More particularly, it therefore holds in this example that the second reading device 2.2, if it receives a response from a transponder 6 of the second type, delays the transmission of a next transmission pulse and feeds a synchronization signal to the synchronization connection 8, while the other reading devices 2.1, 2.3-2.n, including the first reading device 2.1 which functions as master, in response to the synchronization signal of the second reading device 2.2, likewise delay the transmission of the interrogation transmission pulse. The first reading device 2.i then generates, after delay, a new interrogation transmission pulse. Further, the first reading device 2.1 then generates a synchronization signal which is fed to the synchronization connection 8, so that all other reading devices 2.2-2.n, including the second reading device 2.2, in response to the synchronization signal of the first reading device, transmit a new interrogation transmission pulse, synchronized with the first reading device.

Right after power-up, or failure (for whatever reason) of the master, a situation arises where there is no reading device that has the role of master. The assumption of the master role occurs on a random basis: after power-up, each reading device 2.1-2.n generates its own random wait time. If for a period longer than 20 ms plus its own random wait time, a reading device 2.1 has not detected a change of the synchronization connection from high to low, the reading device 2.1 tries to become master by making its 'sync out' output high and hence the synchronization connection 8 low. The other reading devices 2.1-2.2, whose random wait time was longer, witness the synchronization connection becoming low and maintain their slave role from that moment.

To make sure that there cannot arise any conflict in that there are several reading devices that want to assume the role of master, there is a master check, that is, the master 2.1, after a fixed time after making its 'sync out' high, places a random master code on the 'sync out' output 9 (and hence on the synchronization connection) and simultaneously reads its 'sync in' input. If no other code has been placed on the synchronization connection by another master 2.i, the master 2.1 will be able to read its own code, unaffected, on that input. The master check is thus successful and its master status is confirmed. If there *are* several masters, the different master codes will (partly) overwrite each other and none of the reading devices will be able to read in its own code unaffected, and the master check has failed. The reading devices 2.1, 2.i which have tried to become master will generate a new random wait time and clear the synchronization connection again (it becomes high again). The reading devices 2.2-2i-1, 2.i+1-2.n which were slaves already, retain their random wait time. All reading devices now try to become master again by being the first to make the synchronization connection low and passing the master check successfully.

The master code, in this example, is placed on the synchronization connection in the form of a differential biphase code. The time duration of a bit is 1 ms. As a result, every millisecond there is a flank transition from high to low or vice versa.

A slave does not synchronize with a master until it has detected a positive pulse of 2 ms at a minimum on the synchronization connection. Since the bit length is less than 2 ms, the synchronization of the slave with the master is not disturbed by the master code. (See Fig. 7)

What holds, therefore, is that, in use, at the start-up of the system or the failure of the first reading device 2.1, each reading device which has not failed generates a random wait time and, upon expiry of this wait time plus a predetermined wait time, feeds a synchronization signal to the synchronization connection when it has not yet, through the synchronization connection, received any synchronization signal from one of the other reading devices, while these other reading devices, in response to the received synchronization signal which has been generated by one of the reading devices, are going to function as slaves, while the reading device which transmits the synchronization signal is going to function as master.

The ISO 11785 protocol prescribes that after each tenth period of HDX reception (antenna field off), there comes a 'Fixed Pattern' for the purpose of the synchronization of a possible mobile reading device with a stationary reader. This 'Fixed Pattern' consists of a fixed time of 50 ms 'antenna field on' for FDX-B reception and a fixed time of 20 ms 'antenna field off for HDX reception. In the system according to the invention, of that 'Fixed Pattern', the 50 ms of FDX time is used by the master to do the master check again. In that period of 50 ms 'antenna field on', due to the master check, the slaves witness the status of the synchronization connection changing instantly from low to high and recognize therein the instruction that the 'Fixed Pattern' is to be followed.

If the master check fails, the masters are reduced to slaves again and they will clear the synchronization connection (it becomes high again) and generate a new random wait time. All reading devices (the slaves here use their old wait time) now get the chance again to become the new master.

What holds, therefore, is that the reading device which is going to function as master feeds a code to the synchronization connection, while all reading devices try again to become master as has been described hereinabove when the reading devices detect at least two mutually interfering codes on the synchronization connection, and all reading devices maintain their status of slave and master when no mutually interfering codes are detected.

The invention is not limited in any way to the embodiments outlined hereinbefore. Thus, the invention can also be used in reading devices working according to a protocol other than the above-described ISO 11785 protocol. It is also possible that a reading device, when prolonging the first value, also prolongs the second value, and vice versa. It is also possible that the first value is always prolonged by a fixed value. The magnitude of this prolonged value can be, for instance, 100 ms. It is also possible that the second value is prolonged to 20 ms at a maximum, with a shorter prolongation being possible when the respective reading device which receives the message from the second-type transponder establishes that the message has come in. In that case, the reading device can indicate in the manner outlined above that the quiescent period is over. If the respective reading device is the master, it can generate a signal on the synchronization connection 8 which causes all other reading devices to proceed to transmit a new transmission pulse. When the respective reading device is a slave, it can generate on the synchronization connection a signal which causes the master, after reception of the sign, to generate in its turn a signal on the synchronization connection which causes all reading devices including the reading device 2.1 to generate a new interrogation transmission pulse in a synchronized manner. In this example, use is made of a 'Wired-Nor' 10 circuit. It is also possible, however, to use other circuits which offer the same functionality.

In this example, the synchronization connection consists of a wire connection. Other connections, such as glass fiber connection and wireless connections can also be used.

In the examples, it has been discussed that the first value can be prolonged to 100 ms at a maximum. Other values are also possible. Moreover, a greater value than 100 ms can arise when the reading device 2.i, after a first reply has already been received from a first transponder of the first type, for instance 20 ms, has later received a second reply from a second transponder of the first type. At this second transponder, the total first value can then be prolonged to a maximum value which is greater than 100 ms. Similarly, the quiescent period can be prolonged to a value greater than 20 ms, for instance 10 ms, when after the reading device has received a signal from a first transponder of the second type, it further receives a signal from a second transponder of the second type.

Also, in a manner known per se, by means of the interrogation transmission field, information can be written from a reading device to a transponder (first or second type). To that end, the transponders can comprise a writable memory for storing the received information. Such variants are all understood to fall within the scope of the invention, as far as they fall within the scope of the appended claims.

## Claims

1. A system comprising multiple reading devices (2.1, 2.2-2.n) which are arranged for wireless readout of at least two different types of transponders (4,6), each reading device (2.1, 2.2-2.n) being arranged for generating, in use, a time-repetitive electromagnetic interrogation transmission pulse, while the pulse duration has a predetermined first value (ΔT) and the quiescent period between two successive interrogation transmission pulses has a predetermined second value (ΔR) when the reading device (2.1, 2.2-2.n) does not receive a response from one of the transponders; the first value of the reading device (2.1, 2.2-2.n) is prolonged when the reading device (2.1, 2.2-2.n) during the transmission of an interrogation transmission pulse receives a response from at least one transponder (4) of a first type of the transponders (4,6); and the second value of the reading device (2.1, 2.2-2.n) is prolonged when the reading device (2.1, 2.2-2.n), in between the transmission of two interrogation transmission pulses, receives a response from at least one transponder (6) of a second type of the transponders (4,6), **characterized in that** the reading devices (2.1, 2.2-2.n) are connected with each other through a synchronization connection (8), while, in use, a first reading device (2.1) of the multiple reading devices functions as master and feeds synchronization signals to the synchronization connection (8), and the other reading devices (2.2-2.n) of the multiple reading devices function as slaves and in response to the synchronization signals of the first reading device (2.1) on the synchronization connection (8) synchronize the transmission of the interrogation transmission pulses with the transmission of the interrogation transmission pulses by the first reading device (2.1), while a second reading device (2.2) of the other reading devices, if it receives a response from a transponder (4) of the first type and/or a transponder (6) of the second type and correspondingly prolongs the first and/or second value, feeds synchronization signals to the synchronization connection (8), so that all reading devices (2.1,2.3-2.n) other than the second device (2.2), including the first reading device (2.1), likewise transmit with a prolonged first and/or second value.

2. A system according to claim 1, **characterized in that** the second reading device (2.2), if it receives a response from a transponder (6) of the second type, delays the transmission of a next interrogation transmission pulse and feeds a synchronization signal to the synchronization connection (8), while the other reading devices (2.1,2.3-2.n), including the first reading device (2.1), in response to the synchronization signal of the second reading device (2.2), likewise delay the transmission of interrogation transmission pulses.

3. A system according to claim 2, **characterized in that** the first reading device (2.1), after delay, generates a new interrogation transmission pulse and then feeds a synchronization signal to the synchronization connection (8) so that all other reading devices (2.1,2.3-2.n), including the second reading device (2.2), in response to the synchronization signal of the first reading device (2.1), transmit new interrogation transmission pulses, synchronized with the first reading device (2.1).

4. A system according to claim 1, 2 or 3, **characterized in that** the second reading device (2.2), if during the transmission of an interrogation transmission pulse it receives a response from a transponder (4) of the first type, prolongs the transmission of the interrogation transmission pulse and during the prolonged transmission of the interrogation transmission pulse feeds a synchronization signal to the synchronization connection (8), while all other reading devices (2.1,2.3-2.n), including the first reading device (2.1), in response to the synchronization signal, prolong the transmission of the interrogation transmission pulses, at least until no synchronization signal is fed by the second reading device (2.2) to the synchronization connection (8) anymore.

5. A system according to claim 4, **characterized in that** the first reading device (2.1), after the second reading device (2.2) no longer feeds a synchronization signal to the synchronization connection (8), generates an interrogation field transmission pulse and feeds a synchronization signal to the synchronization connection (8), in response to which all other reading devices (2.1,2.2-2.n), including the second reading device (2.2), generate interrogation field transmission pulses, synchronized with the first reading device (2.1).

6. A system according to any one of the preceding claims, **characterized in that** in use, at the start-up of the system or in case of failure of the first reading device (2.1), each reading device which has not failed generates a random wait time and upon expiry of this wait time plus a predetermined wait time, feeds a synchronization signal to the synchronization connection (8) when it has not yet, via the synchronization connection (8), received any synchronization signal from one of the other reading devices, while these other reading devices, in response to the received synchronization signal which has been generated by one of the reading devices, are going to function as slaves, while the reading device which transmits the synchronization signal is going to function as master.

7. A system according to claim 6, **characterized in that** the reading device which is going to function as master feeds a code to the synchronization connection (8), while all reading devices try again to become master as has been described in claim 5 when the reading devices detect at least two mutually interfering codes on the synchronization connection, and all reading devices maintain their status of slave and master when no mutually interfering codes are detected.

8. A system according to any one of the preceding claims, **characterized in that** each reading device (2.1,2.2-2.n) functions according to the ISO 11785 protocol.

9. A system according to any one of the preceding claims, **characterized in that** each reading device (2.1,2.2-2.n) comprises a Wired-NOR, the synchronization connection (8) consisting of a single wire connection via which all Wired-NOR's are connected with each other.

10. A system according to any one of the preceding claims, **characterized in that** the magnitude of a prolongation of a first value is at most a predetermined maximum value upon receipt of a response from one transponder (4) of the first type.

11. A system according to any one of the preceding claims, **characterized in that** the magnitude of a prolongation of the second value is a predetermined fixed value upon receipt of a response from one transponder (6) of the second type.

12. A system according to any one of the preceding claims, **characterized in that** the transponders (4) of the first type are full-duplex transponders.

13. A system according to any one of the preceding claims, **characterized in that** the transponders (6) of the second type are half-duplex transponders.

14. A system according to any one of the preceding claims, **characterized in that** each reading device (2.1,2.2-2.n), when prolonging the first value, also prolongs the second value, and vice versa.

15. A reading device of the system according to any one of the preceding claims, arranged to operate at any one time alternatively either as the first or the second reading device.

## Patentansprüche

1. System mit mehreren Lesevorrichtungen (2.1,2.2-2.n), welche zum drahtlosen Auslesen wenigstens zweier unterschiedlicher Arten von Transpondern (4, 6) ausgebildet sind, wobei jede Lesevorrichtung (2.1, 2.2-2.n) im Gebrauch einen zeitlich wiederholten elektromagnetischen Abfragesendeimpuls erzeugt, wobei die Impulsdauer einen vorbestimmten ersten Wert (ΔT) hat und die Ruheperiode zwischen zwei aufeinanderfolgenden Abfragesendeimpulsen einen vorbestimmten zweiten Wert (ΔR) hat, wenn die Lesevorrichtung (2.1,2.2-2.n) keine Antwort von einem der Transponder empfängt; der erste Wert der Lesevorrichtungen (2.1,2.2-2.n) verlängert wird, wenn die Lesevorrichtung (2.1,2.2-2.n) während der Übertragung eines Abfragesendeimpulses eine Antwort von wenigstens einem Transponder (4) eines ersten Typs von Transpondern (4, 6) empfängt, und der zweite Wert der Lesevorrichtung (2.1,2.2-2.n) verlängert wird, wenn die Lesevorrichtung (2.1,2.2-2.n) zwischen der Übertragung zweier Abfragesendeimpulse eine Antwort von wenigstens einem Transponder (6) eines zweiten Typs der Transponder (4, 6) empfängt, **dadurch gekennzeichnet, daß** die Lesevorrichtungen (2.1,2.2-2.n) miteinander durch eine Synchronisationsverbindung (8) verbunden sind, wobei im Gebrauch eine erste Lesevorrichtung (2,1) der mehreren Lesevorrichtungen als Master wirkt und Synchronisierungssignale an die Synchronisationsverbindung (8) liefert, und die anderen Lesevorrichtungen (2.2-2.n) der mehreren Lesevorrichtungen als Slaves dienen und in Reaktion auf die Synchronisierungssignale der ersten Lesevorrichtung (2.1) auf der Synchronisationsverbindung (8) die Übertragung der Abfragesendeimpulse mit der Übertragung der Abfragesendeimpulse der ersten Lesevorrichtung (2.1) synchronisieren, wobei eine zweite Lesevorrichtung (2.2) der anderen Lesevorrichtungen, wenn sie eine Antwort von einem Transponder (4) des ersten Typs und/oder einem Transponder (6) des zweiten Typs empfängt und den ersten und/oder den zweiten Wert verlängert, Synchronisierungssignale an die Synchronisationsverbindung (8) liefert, so daß sämtliche Lesevorrichtungen (2.1,2.3-2.n) außer der zweiten Vorrichtung (2.2), einschließlich der ersten Lesevorrichtung (2.1), gleichermaßen mit einem verlängerten ersten und/oder zweiten Wert übertragen.

2. System nach Anspruch 1, **dadurch gekennzeichnet, daß** die zweite Lesevorrichtung (2.2), wenn sie eine Antwort von einem Transponder (6) des ersten Typs empfängt, die Übertragung eines nächsten Abfragesendeimpulses verzögert und ein Synchronisierungssignal an die Synchronisationsverbindung (8) sendet, während die anderen Lesevorrichtungen (2.1,2.3-2.n), einschließlich der ersten Lesevorrichtung (2.1), in Reaktion auf das Synchronisierungssignal der zweiten Lesevorrichtung (2.2) gleichermaßen die Übertragung von Abfragesendeimpulsen verzögern.

3. System nach Anspruch 2, **dadurch gekennzeichnet, daß** die erste Lesevorrichtung (2.1) nach der Verzögerung einen neuen Abfragesendeimpuls erzeugt und anschließend ein Synchronisierungssignal an die Synchronisierungsverbindung (8) liefert, so daß sämtliche anderen Lesevorrichtungen (2.1,2.3-2.n), einschließlich der zweiten Lesevorrichtung (2.2) in Reaktion auf das Synchronisierungssignal der ersten Lesevorrichtung (2.1) neue Abfragesendeimpulse übertragen, die mit der ersten Lesevorrichtung (2.1) synchronisiert sind.

4. System nach Anspruch 1, 2 oder 3, **dadurch gekennzeichnet, daß** die zweite Lesevorrichtung (2.2), wenn sie während der Übertragung eines Abfragesendeimpulses eine Antwort von einem Transponder (4) des ersten Typs empfängt, die Übertragung des Abfragesendeimpulses verlängert und während der verlängerten Übertragung des Abfragesendeimpulses ein Synchronisierungssignal an die Synchronisationsverbindung (8) sendet, während sämtliche anderen Lesevorrichtungen (2.1,2.3-2.n), einschließlich der ersten Lesevorrichtung (2.1), in Reaktion auf das Synchronisierungssignal die Übertragung der Abfragesendeimpulse zumindest so lange verlängern, bis kein Synchronisierungssignal von der zweiten Lesevorrichtung (2.2) mehr an die Synchronisationsverbindung (8) geliefert wird.

5. System nach Anspruch 4, **dadurch gekennzeichnet, daß** die erste Lesevorrichtung (2.1), nachdem die zweite Lesevorrichtung nicht länger ein Synchronisierungssignal an die Synchronisationsverbindung (8) liefert, einen Abfragefeldsendeimpuls erzeugt und ein Synchronisierungssignal an die Synchronisationsverbindung (8) liefert, in Reaktion auf welches sämtliche anderen Lesevorrichtungen (2.1,2.2-2.n), einschließlich der zweiten Lesevorrichtung (2.2) Abfragefeldsendeimpulse erzeugen, die mit der ersten Lesevorrichtung (2.1) synchronisiert sind.

6. System nach einem der vorhergehenden Ansprüche, **dadurch gekennzeichnet, daß** im Gebrauch beim Starten des Systems oder im Falle eines Ausfalls der ersten Lesevorrichtung (2.1) jede Lesevorrichtung, die nicht ausgefallen ist, eine beliebige Wartezeit erzeugt und bei Ablauf der Wartezeit plus einer vorbestimmten Wartezeit ein Synchronisierungssignal an die Synchronisationsverbindung (8) liefert, wenn sie über die Synchronisationsverbindung (8) noch kein Synchronisierungssignal von einer der anderen Lesevorrichtungen empfangen hat, während diese anderen Lesevorrichtungen in Reaktion auf das von einer der Lesevorrichtungen erzeugte empfangene Synchronisierungssignal die Slave-Funktion einnehmen, während die Lesevorrichtung, welche das Synchronisierungssignal überträgt, die Master-Funktion einnimmt.

7. System nach Anspruch 6, **dadurch gekennzeichnet, daß** die Lesevorrichtung, welche die Master-Funktion einnimmt, der Synchronisationsverbindung (8) einen Code zuführt, während sämtliche Lesevorrichtungen, wie in Anspruch 5 beschrieben, wieder versuchen, Master zu werden, wenn die Lesevorrichtungen wenigstens zwei einander störende Codes an der Synchronisationsverbindung erkennen wobei, und sämtliche Lesevorrichtungen ihren Status als Slave und Master beibehalten, wenn keine einander störenden Codes erkannt werden.

8. System nach einem der vorhergehenden Ansprüche, **dadurch gekennzeichnet, daß** jede Lesevorrichtung (2.1,2.2-2.n) nach dem ISO 11785 Protokoll arbeitet.

9. System nach einem der vorhergehenden Ansprüche, **dadurch gekennzeichnet, daß** jede Lesevorrichtung (2.1,2.2-2.n) ein verdrahtetes NOR-Gatter aufweist, wobei die Synchronisationsverbindung (8) aus einer Einzeldrahtverbindung besteht, über welche sämtliche verdrahteten NOR-Gatter miteinander verbunden sind.

10. System nach einem der vorhergehenden Ansprüche, **dadurch gekennzeichnet, daß** der Betrag der Verlängerung des ersten Werts höchstens ein vorbestimmter Höchstwert beim Empfangen einer Antwort von einem Transponder (4) des ersten Typs ist.

11. System nach einem der vorhergehenden Ansprüche, **dadurch gekennzeichnet, daß** der Betrag der Verlängerung des zweiten Werts höchstens ein vorbestimmter Festwert beim Empfangen einer Antwort von einem Transponder (6) des zweiten Typs ist.

12. System nach einem der vorhergehenden Ansprüche, **dadurch gekennzeichnet, daß** die Transponder (4) des ersten Typs Voll-Duplex-Transponder sind.

13. System nach einem der vorhergehenden Ansprüche, **dadurch gekennzeichnet, daß** die Transponder (6) des zweiten Typs Halb-Duplex-Transponder sind.

14. System nach einem der vorhergehenden Ansprüche, **dadurch gekennzeichnet, daß** jede Lesevorrichtung (2.1, 2.2-2.n), wenn sie den ersten Wert verlängert, auch den zweiten Wert verlängert, und umgekehrt.

15. Lesevorrichtung des Systems nach einem der vorhergehenden Ansprüche, die derart ausgebildet ist, daß sie zu jedem Zeitpunkt alternativ entweder als die erste oder die zweite Lesevorrichtung arbeiten kann.

## Revendications

1. Système comprenant plusieurs dispositifs de lecture (2.1, 2.2-2.n) qui sont adaptés pour permettre la lecture sans fil d'au moins deux types différents de transpondeurs (4, 6), chaque dispositif de lecture (2.1, 2.2-2.n) étant adapté pour produire, en utilisation, une impulsion de transmission d'interrogation électromagnétique répétitive, la durée d'impulsion ayant une première valeur prédéterminée (ΔT) et la période de repos entre deux impulsions de transmission d'interrogation successives ayant une deuxième valeur prédéterminée (ΔR) lorsque le dispositif de lecture (2.1, 2.2-2.n) ne reçoit pas une réponse de l'un des transpondeurs, la première valeur du dispositif de lecture (2.1, 2.2-2.n) est prolongée lorsque le dispositif de lecture (2.1, 2.2-2.n), au cours de la transmission d'une impulsion de transmission d'interrogation, reçoit une réponse d'au moins un transpondeur (4) d'un premier type parmi les transpondeurs (4, 6), et la deuxième valeur du dispositif de lecture (2.1, 2.2-2.n) est prolongée lorsque le dispositif de lecture (2.1, 2.2-2.n), entre la transmission de deux impulsions de transmission d'interrogation, reçoit une réponse d'au moins un transpondeur (6) d'un deuxième type parmi les transpondeurs (4, 6), **caractérisé en ce que** les dispositifs de lecture (2.1, 2.2-2.n) sont reliés entre eux par une connexion de synchronisation (8), et, en utilisation, un premier dispositif de lecture (2.1) parmi lesdits dispositifs de lecture fonctionne en tant que maître et envoie des signaux de synchronisation à la connexion de synchronisation (8), et les autres dispositifs de lecture (2.2-2.n) fonctionnent en tant qu'esclaves et, en réponse aux signaux de synchronisation du premier dispositif de lecture (2.1) envoyés à la connexion de synchronisation (8), synchronisent la transmission des impulsions de transmission d'interrogation avec la transmission des impulsions de transmission d'interrogation effectuée par le premier dispositif de lecture (2.1), tandis qu'un deuxième dispositif de lecture (2.2) parmi les autres dispositifs de lecture, s'il reçoit une réponse d'un transpondeur (4) du premier type et/ou d'un transpondeur (6) du deuxième type et prolonge en conséquence la première et/ou la deuxième valeur(s), envoie des signaux de synchronisation à la connexion de synchronisation (8), de sorte que tous les dispositifs de lecture (2.1, 2.3-2.n) autres que le deuxième dispositif (2.2), y compris le premier dispositif de lecture (2.1), transmettent de même avec une première et/ou une deuxième valeur(s) prolongée(s).

2. Système selon la revendication 1, **caractérisé en ce que** le deuxième dispositif de lecture (2.2), s'il reçoit une réponse d'un transpondeur (6) du deuxième type, retarde la transmission d'une impulsion de transmission d'interrogation suivante et envoie un signal de synchronisation à la connexion de synchronisation (8), tandis que les autres dispositifs de lecture (2.1, 2.3-2.n), y compris le premier dispositif de lecture (2.1), en réponse au signal de synchronisation du deuxième dispositif de lecture (2.2), retardent de même la transmission d'impulsions de transmission d'interrogation.

3. Système selon la revendication 2, **caractérisé en ce que** le premier dispositif de lecture (2.1), après un retard, génère une nouvelle impulsion de transmission d'interrogation puis envoie un signal de synchronisation à la connexion de synchronisation (8) de telle manière que tous les autres dispositifs de lecture (2.1, 2.3-2.n), y compris le deuxième dispositif de lecture (2.2), en réponse au signal de synchronisation du premier dispositif de lecture (2.1), transmettent de nouvelles impulsions de transmission d'interrogation, synchronisées avec le premier dispositif de lecture (2.1).

4. Système selon la revendication 1, 2 ou 3, **caractérisé en ce que** le deuxième dispositif de lecture (2.2), s'il reçoit, pendant la transmission d'une impulsion de transmission d'interrogation, une réponse d'un transpondeur (4) du premier type, prolonge la transmission de l'impulsion de transmission d'interrogation et au cours de la transmission prolongée de l'impulsion de transmission d'interrogation, envoie un signal de synchronisation à la connexion de synchronisation (8), tandis que tous les autres dispositifs de lecture (2.1, 2.3-2.n), y compris le premier dispositif de lecture (2.1), en réponse au signal de synchronisation, prolongent la transmission des impulsions de transmission d'interrogation, au moins jusqu'à ce que le deuxième dispositif de lecture (2.2) n'envoie plus de signal de synchronisation à la connexion de synchronisation (8).

5. Système selon la revendication 4, **caractérisé en ce que** le premier dispositif de lecture (2.1), après que le deuxième dispositif de lecture (2.2) a arrêté d'envoyer un signal de synchronisation à la connexion de synchronisation (8), produit une impulsion de transmission de champ d'interrogation et envoie un signal de synchronisation à la connexion de synchronisation (8), en réponse auquel tous les autres dispositifs de lecture (2.1, 2.2-2.n), y compris le deuxième dispositif de lecture (2.2), produisent des impulsions de transmission de champ d'interrogation, synchronisées avec le premier dispositif de lecture (2.1).

6. Système selon l'une quelconque des revendications précédentes, **caractérisé en ce que**, en utilisation, au démarrage du système ou en cas de défaillance du premier dispositif de lecture (2.1), chaque dispositif de lecture qui n'a pas eu de défaillance produit un temps d'attente aléatoire et lors de l'expiration de ce temps d'attente plus un temps d'attente prédéterminé, envoie un signal de synchronisation à la connexion de synchronisation (8) quand il n'a encore reçu aucun signal de synchronisation, via la connexion de synchronisation (8), de l'un des autres dispositifs de lecture, tandis que ces autres dispositifs de lecture, en réponse au signal de synchronisation reçu qui a été produit par l'un des dispositifs de lecture, vont fonctionner en tant qu'esclaves, tandis que le dispositif de lecture qui transmet le signal de synchronisation va fonctionner en tant que maître.

7. Système selon la revendication 6, **caractérisé en ce que** le dispositif de lecture qui va fonctionner en tant que maître envoie un code à la connexion de synchronisation (8), tandis que tous les dispositifs de lecture réessaient de devenir maître comme décrit en revendication 5 quand les dispositifs de lecture détectent au moins deux codes qui interfèrent mutuellement sur la connexion de synchronisation, et tous les dispositifs de lecture maintiennent leur statut d'esclave et de maître quand ce n'est pas le cas.

8. Système selon l'une quelconque des revendications précédentes, **caractérisé en ce que** chaque dispositif de lecture (2.1, 2.2-2.n) fonctionne selon le protocole ISO 11785.

9. Système selon l'une quelconque des revendications précédentes, **caractérisé en ce que** chaque dispositif de lecture (2.1, 2.2-2.n) comprend un NON-OU câblé, la connexion de synchronisation (8) consistant en une connexion à un fil par laquelle tous les NON-OU câblés sont reliés.

10. Système selon l'une quelconque des revendications précédentes, **caractérisé en ce que** l'amplitude d'une prolongation d'une première valeur vaut au plus une valeur maximale prédéterminée lors de la réception d'une réponse d'un transpondeur (4) du premier type.

11. Système selon l'une quelconque des revendications précédentes, **caractérisé en ce que** l'amplitude d'une prolongation de la deuxième valeur vaut une valeur fixe prédéterminée lors de la réception d'une réponse d'un transpondeur (6) du deuxième type.

12. Système selon l'une quelconque des revendications précédentes, **caractérisé en ce que** les transpondeurs (4) du premier type sont des transpondeurs duplex.

13. Système selon l'une quelconque des revendications précédentes, **caractérisé en ce que** les transpondeurs (6) du deuxième type sont des transpondeurs semi-duplex.

14. Système selon l'une quelconque des revendications précédentes, **caractérisé en ce que** chaque dispositif de lecture (2.1, 2.2-2.n), lorsqu'il prolonge la première valeur, prolonge aussi la deuxième valeur, et vice versa.

15. Système selon l'une quelconque des revendications précédentes, adapté pour fonctionner à tout moment alternativement soit en tant que premier soit en tant que deuxième dispositif de lecture.
